# EUROPEAN PATENT SPECIFICATION

(11) **EP 2 942 238 B1**
(45) Date of publication and mention of the grant of the patent: **28.02.2018**
(21) Application number: 14167640.3
(22) Date of filing: 09.05.2014
(51) Int. Cl.: B60R 11/00, B60R 11/04

(54) **Pane bracket and a method for manufacturing a pane bracket of a vehicle**
Scheibenträger und Verfahren zur Herstellung eines Scheibenträgers für ein Fahrzeug
Support de vitre et procédé de fabrication d'un support de vitre d'un véhicule

(43) Date of publication of application: 11.11.2015
(73) Proprietor: Continental Automotive GmbH, 30165 Hannover (DE)
(72) Inventor: Vuletici, Goran, 327367 Campia, Jud. Caras-Severin (RO)
(74) Representative: Bobbert, Christiana

(56) References cited:
- WO-A1-2007/091247
- WO-A1-2013/123161
- DE-A1-102004 042 217
- DE-A1-102007 048 022
- DE-A1-102012 024 274

## Description

The invention relates to a pane bracket for mounting components in a vehicle and to a method for manufacturing such a pane bracket.

Vehicles, in particular cars or trucks, comprise an increasing number of electronic components. Most vehicles comprise a driver assistance system which assists the driver when driving the car and which provides different assisting functions to support the driver when performing driving manoeuvres. These driver assistance systems can comprise different sensor units such as optical sensors, in particular cameras. Further, the driver assistance system can comprise Lidar sensor units or radar sensor units. Other possible sensor units are sensors to detect rain or other precipitations such as snowfall. Most vehicles further comprise a navigation system which receives position data from a GPS unit. The different sensors or sensor units have to be installed in the vehicle and connected by electromechanical connectors and wires to processing units which process the received data. For many sensors, it is necessary to position the sensors in specific areas of the car so that they can provide the desired sensor data of the vehicle's surrounding. Some sensor units make it even necessary to position the respective sensor units behind a transparent window pane. In particular, optical sensors such as cameras have to be positioned behind transparent window panes. Accordingly, many electronic or electromechanical components have to be mounted at specific locations in the vehicle and require an accurate positioning.

Conventional windshield brackets are used in the automotive industry in order to mount electronic and electromechanical components on the windshield of the vehicle. These electronic and electromechanical components are placed in windshield pane brackets.

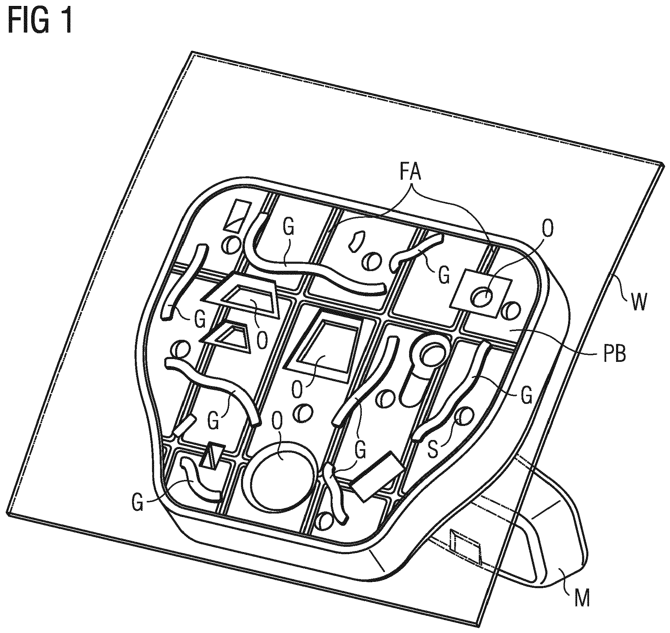

Fig. 1 shows a conventional windshield pane bracket PB attached to a windshield W. The conventional pane bracket PB has an opening O through which a rear mirror M of the vehicle is glued to the windshield W. The conventional pane bracket PB as illustrated in Fig. 1 uses multiple standoffs S which comprises flexible areas FA which are pushed during a gluing process towards the windshield W in order to ensure contact in all flexible areas. Before pressing the casing of the pane bracket to the windshield, a gluing substance G is put on the lower pane-facing wall of the pane bracket PB, where it is necessary that the gluing substance G covers at least partially at least some of the flexible areas FA of the pane-facing wall of the casing of the conventional pane bracket PB as illustrated in Fig. 1. By pushing the pane bracket PB against the windshield W, additional deformations and tensions are generated which leads to a wrong positioning and orientation of mechanical and/or electronic components within the pane bracket casing. Fig. 1 shows also openings or holes O for specific optical sensor units or electronic components such as cameras to provide images from the vehicle's surrounding through the openings O of the pane bracket casing. For attaching the pane bracket PB to a curved windshield W, the operator has to put a gluing material G on at least some flexible areas and then press the lower pane-facing wall of the pane bracket PB with mechanical force against the curved windshield W. This has several disadvantages. First, the operator or user has to make sure that at least some flexible areas FA are at least partially covered by gluing material G. Further, a significant disadvantage is that by pressing the lower pane bracket wall against the curved windshield W, a significant deformation of the casing and mechanical tensions are provided so that the electronic components within the casings do not get an accurate positioning and orientation. Consequently, in particular sensor units within the pane bracket casing will not be placed at the optimal position and have a suboptimal orientation for generating sensor data of the vehicle's surrounding. This in turn can lead to impaired sensor data applied to the driver assistance system of the vehicle.

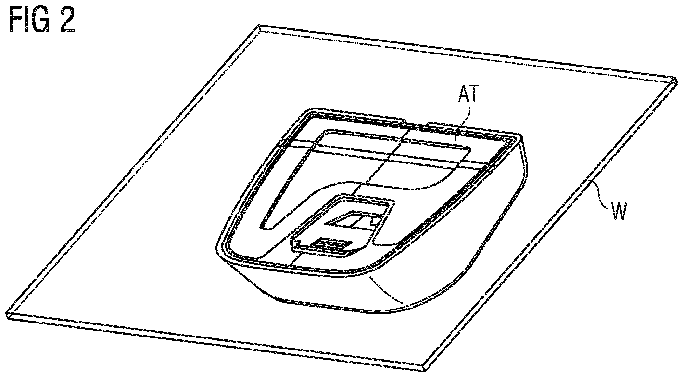

Accordingly, it was suggested to attach windshield pane brackets PB by means of an adhesive tape as illustrated in Fig. 2. As shown in Fig. 2, the pane-facing wall of the pane bracket PB is partially covered by an adhesive tape AT. In this conventional pane bracket PB no standoffs are used, because this affects the gluing process by limiting the compression of the adhesive tape AT. However, the conventional pane bracket illustrated in Fig. 2 is constrained by the size of the pane bracket PB and the gluing surface of the adhesive tape AT. If the pane bracket size exceeds a certain size, and taking into consideration the curved shape and/or waviness of the windshield W, a conventional pane bracket PB cannot keep the physical contact between the adhesive tape AT and the windshield W in all gluing areas. Accordingly, the conventional pane bracket PB illustrated in Fig. 2 only has a very limited size so that it cannot receive a plurality of electronic or electromechanical components connected to a driver assistance system of the vehicle.

DE 10 2007 048 022 A1 relates to a method for fixing an attachment on a bodywork component of a vehicle, comprises pre-assembling a hot-melt adhesive on the attachment, positioning the attachment with the pre-assembling hot-melt adhesive on the bodywork component or in its vicinity and melting the hot-melt adhesive by an induction process.
Accordingly, it is an object of the present invention to provide a pane bracket of unlimited size to contain a high number of components and which is easy to attach to a pane and which provides very accurate positioning of the components. This object is achieved by a pane bracket comprising the features of claim 1.

In a possible embodiment of the pane bracket according to a first aspect of the present invention, the casing of the pane bracket is adapted to receive mechanical and/or electronic components. According to the invention, the pane-facing wall of said casing comprises three spherical standoffs to provide a contact plane between the pane bracket and the pane of the vehicle.

In a still further possible embodiment of the pane bracket according to the first aspect of the present invention, the pane bracket is adapted to be attached to the pane comprising a curved shape.

In a still further possible embodiment of the pane bracket according to the first aspect of the present invention, the pane-facing wall comprises a curved surface corresponding to the curved shape of the pane of the vehicle.

In a still further possible embodiment of the pane bracket according to the first aspect of the present invention, the gluing path surface has a limited contact area and is adapted to receive a gluing substance which does glue the gluing path surface to the pane of the vehicle.

The invention further provides according to a second aspect a vehicle having at least one pane with a curved shape, wherein a pane bracket according to the first aspect of the present invention is attached to.

In a possible embodiment of the vehicle according to the second aspect of the present invention, the pane is a transparent window pane of said vehicle.

In a still further possible embodiment of the vehicle according to the second aspect of the present invention, the window pane is a windshield pane of said vehicle.

In a still further possible embodiment of the vehicle according to the second aspect of the present invention, a rear view mirror of the vehicle is mounted to the pane between the pane bracket, e.g. such that the pane bracket surrounds a foot of the mirror, wherein the foot of the mirror is glued to the pane. Alternatively, the mirror can be mounted to the pane bracket itself.

In a still further possible embodiment of the vehicle according to the second aspect of the present invention, the casing of the pane bracket is adapted to receive mechanical and/or electronic components of a driver assistance system of said vehicle.
The invention further provides according to a third aspect a method for manufacturing a pane bracket of a vehicle comprising the features of claim 10. In a possible embodiment of the method according to the third aspect of the present invention, the pane-facing wall is formed such that it matches a curved shape of the respective pane. According to the present invention, the pane-facing wall is formed with three spherical standoffs to provide a contact plane between the pane bracket and the pane. In a further possible of the method according to the third aspect of the present invention, the casing of the pane bracket is formed from a fire-resistant plastic material.

In the following, possible embodiments of the different aspects of the present invention are described with reference to the enclosed figures in more detail.
- Fig. 1: shows a front view of a windshield bracket assembly according to the state of the art;
- Fig. 2: shows a further conventional pane bracket glued to a windshield with an adhesive tape according to the state of the art;
- Fig. 3: shows a front view of an exemplary pane bracket assembly comprising a pane bracket according to the first aspect of the present invention;
- Fig. 4: shows a further view on the pane bracket assembly as shown in Fig. 3 from the interior of a vehicle;
- Fig. 5: shows a cross-section view through a pane bracket casing of a pane bracket according to the first aspect of the present invention attached to the wind-shield with an ideal curved shape;
- Fig. 6: shows a cross-section view through a pane bracket casing of a pane bracket attached to a windshield with a curved not ideal shape to illustrate a problem solved by the present invention;
- Fig. 7: shows a pane bracket casing of a pane bracket according to the first aspect of the present invention attached to a windshield with a non-ideal curved shape.

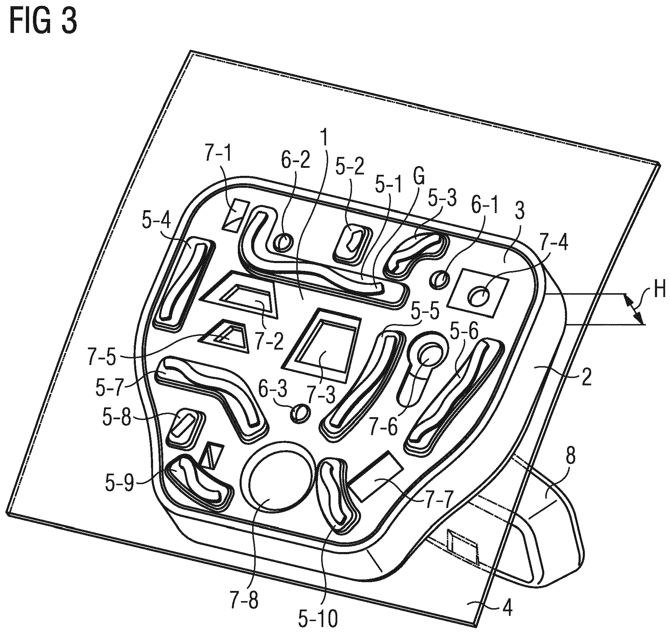

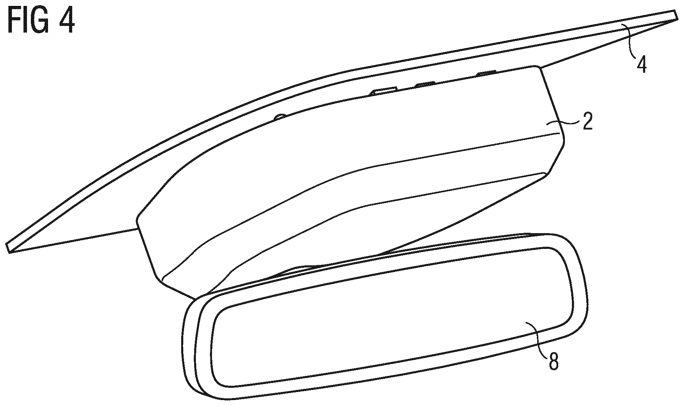

As can be seen in Fig. 3 illustrating a pane bracket 1 according to the first aspect of the present invention, the pane bracket 1 comprises a pane bracket casing 2 having a pane-facing wall 3 adapted to fix the pane bracket casing 3 to a pane 4 of the vehicle. In Fig. 3, the pane bracket 1 is attached to a transparent window pane of the vehicle. In Fig. 3, the transparent window pane 4 is the windshield pane of the vehicle. In Fig. 3, the pane-facing wall 3 of the pane bracket casing 2 has several protruding gluing path surfaces 5-i for gluing the pane-facing wall 3 of the pane bracket casing 2 to the pane 4 and standoffs 6-1, 6-2, 6-3 which are adapted to compensate tolerances between the gluing path surfaces 5-i and the pane 4. The pane 4 which is the windshield of the vehicle comprises a curved shape.
The pane bracket 1 is provided for mounting mechanical and/or electromechanical and/or electronic components in a vehicle. These components are received by the pane bracket casing 2 having a height H and providing sufficient volumen to receive all necessary components. The electromechanical and/or electronic components within the pane bracket casing 2 can comprise sensor units such as cameras, Lidar sensors, radar sensors, rain sensors or GPS sensors as well as electromechanical components such as connectors, electronic wires or any other components necessary to generate and transport data to a processing unit of the vehicle. The electronic and/or electromechanical components within the pane bracket casing 2 can be components of a driver assistance system of the vehicle. Some of these components are electronic sensors which generate sensor data of the vehicle's surrounding. These sensors can have a corresponding opening 7-i in the pane facing wall 3 attached to the transparent windshield pane 4. For instance, camera sensors can take pictures of the surrounding of the vehicle. The generated images provided by the cameras are transported by electronic cables to a data processing unit of the driver assistance system within the vehicle. In Fig. 3, the pane facing wall 3 of the pane bracket casing 2 comprises three spherical standoffs 6-1, 6-2, 6-3. Accordingly, the number of spherical standoffs 6-i is in the shown embodiment n=3. The standoffs 6-i are adapted to compensate tolerances between the gluing path surfaces 5-i and the pane 4. According to the invention, the number of standoffs is n=3 so that they form a defined contact plane between the pane bracket 1 and the vehicle's pane 4. Further, according to the invention, the standoffs 6-i have a spherical shape so that they contact the plane of the window pane 4 at a single point. The spherical standoffs 6-i can be formed by an inelastic or slightly elastic material. According to the invention, only the standoffs 6-i of the casing 2 are in contact with the windshield 4. When mounting the pane bracket 1 according to the present invention to the pane 4 of the vehicle, the operator or user puts a gluing substance G on all protruding path surfaces 5-i and presses the lower pane-facing wall 3 of the pane bracket casing 2 against the transparent windshield pane 4 as illustrated in Fig. 3. The protruding gluing path surfaces 5-i gives the user a clear indication where to put the gluing material or gluing substance G. The gluing path surfaces 5-i have in a preferred embodiment a very limited contact area to receive the gluing substance. The function of the gluing path surfaces 5-i is to limit the gluing surface between the pane bracket 1 and the transparent pane 4 only to the area where the glue is applied. By limiting the gluing surfaces to smaller areas, one can better compensate a deviation, especially a waviness deviation, of the windshield in order to obtain the requested gluing gap in the gluing process. The design of the pane bracket 1 with its gluing path surfaces 5-i improves the gluing process by eliminating any technological limitation, i.e. surface tolerances, existing in the production process of the pane bracket 1 and the pane, in particular a windshield pane 4, of a vehicle. The gluing interface of the pane bracket 1 comprises the gluing path surfaces 5-i and the spherical standoffs 6-i positioned on the windshield side, i.e. the lower pane-facing wall 3 of the pane bracket casing 2. The gluing path surface 5-i is situated only in the required area for a gluing application. Depending on the application and use of the respective pane brackets, the design of the pane bracket 1 can be easily modified by only changing the protruding gluing path surfaces 5-i instead of changing the entire pane bracket casing 2 or the entire pane-facing wall 3 of the pane bracket casing 2. The three standoffs 6-1, 6-2, 6-3 do create a defined contact plane between the windshield pane bracket 1 and the windshield 4. If this plane defined by the standoffs 6-i is correctly oriented, then all electronic components within the pane bracket casing 2 observing the exterior or surrounding of the vehicle are also accurately oriented and generate reliable sensor data. Accordingly, the pane bracket 1 as illustrated in Fig. 3 not only facilitates significantly the mounting to the window pane 4 of the vehicle, but also provides a more accurate positioning and orientation of the electronic components within the pane bracket casing 2. Moreover, the pane bracket casing 2 of the pane bracket 1 is not limited in size and can receive a plurality of different electronic or electromechanical components at the same time. The pane bracket casing 2 can also be used to hold other components as illustrated in Fig. 4. In the exemplary embodiment of Fig. 4, a vehicle rear mirror 8 is fixed to the window pane 4 between the pane bracket casing 2 of the pane bracket 1.

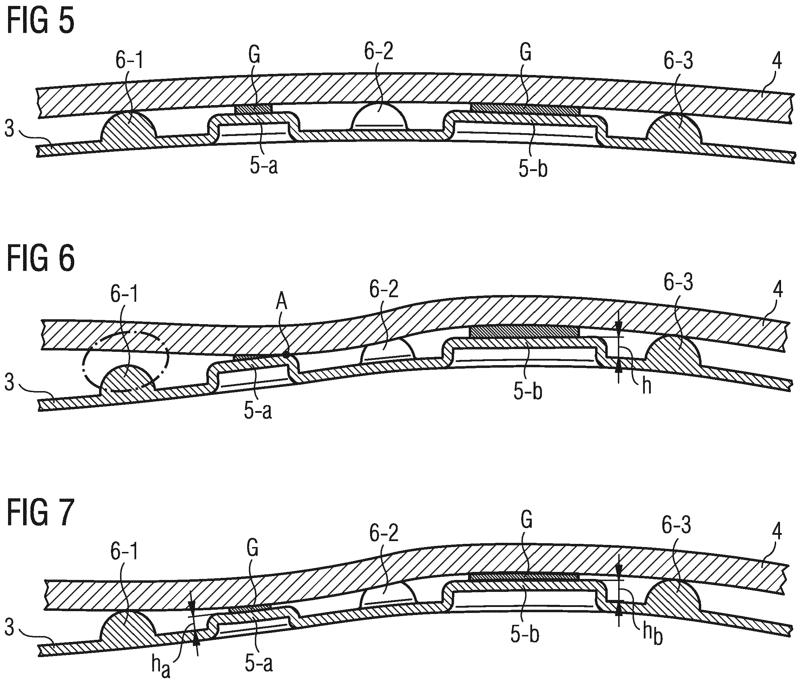

Fig. 5 shows a cross-section view through the lower pane-facing wall 3 attached to a windshield pane 4 having an ideal curved shape with no waves. As can be seen in Fig. 5, the pane-facing wall 3 comprises in the shown embodiment three standoffs 6-1, 6-2, 6-3 with a semi-spherical shape abutting the lower surface of the curved windshield 4. In the shown cross-section view of Fig. 5, two protruding gluing path surfaces 5-a, 5-b are illustrated. A gluing substance G is provided between the lower surface of the curved windshield 4 and the two protruding gluing path surfaces 5-a, 5-b.

If the contact between the pane bracket 1 and the windshield 4 is done in different areas than, the defined three standoffs 6-i, the pane bracket 1 does have a wrong orientation so that the functionality of the contained electronic components is diminished as also illustrated in Fig. 6. In the shown example of Fig. 6, a physical contact is missing between the semi-spherical standoff 6-1 and the windshield 4 having a non-ideal real, i.e. deviated, shape. In the shown example, the pane bracket 1 is touching the windshield 4 in an undefined area A at the first protruding surface 5-a.

With the pane bracket 1 according to the first aspect of the present invention, it is possible to modify only the gluing path surfaces 5-i to ensure a safe contact between the pane bracket casing 2 and the windshield 4 only at the defined three standoffs 6-i and with a predetermined gluing gap between the gluing area and the windshield 4 as illustrated in Fig. 7. In a possible embodiment, the pane bracket 1 and the corresponding pane 4 such as a windshield are developed at the same time; this means that it is impossible to predict waviness deviations for these two parts. For this reason, a modification on the pane bracket design is performed in a possible embodiment to provide a proper fitting between these two mechanical parts. The pane bracket design comprising protruding gluing path surfaces 5-i ensures a fast and cheap modification of the pane bracket 1 in a production phase by controlling all only relatively small gluing path 5-i surfaces located at the lower pane-facing wall 3. By limiting the gluing path surfaces 5-i to smaller areas, the waviness of the pane bracket 1 corresponding to the waviness of the pane 4 such as the curved windshield can be better controlled in order to obtain a required gluing gap in the gluing process. The design of the windshield pane bracket 1 with the gluing path surfaces 5-i significantly improves the gluing process by eliminating any technological limitation existing in the production process of the windshield pane bracket 1 and the windshield 4.
The invention further provides a method for manufacturing a pane bracket 1 of a vehicle. A pane bracket has a pane bracket casing 2 with a pane-facing wall 3 to fix the pane bracket 1 to a pane 4 such as a windshield of the vehicle. In the manufacturing method according to the third aspect of the present invention, the pane-facing wall 3 is formed with protruding gluing path surfaces 5-i and with standoffs 6-i to compensate tolerances between the gluing path surfaces 5-i and the respective pane. The pane-facing wall 3 is formed such that it matches a curved shape of the pane 4, for instance a curved shape of a curved windshield. According to the manufacturing method of the present invention, the pane-facing wall is formed with three spherical standoffs 6 to provide a defined contact plane between the pane bracket 1 and the respective pane 4. In a preferred embodiment, the casing 2 of the pane bracket 1 is formed from a fire-resistant plastic material. In a possible embodiment the surface area and/or the protruding heights ha, h_{b} of the gluing path surfaces 5-a, 5-b can vary and are formed to match the shape of the curved non-ideal pane 4.

In the embodiment shown in Fig. 3, a pane bracket 1 is attached to a transparent curved glass window pane of the vehicle such as the windshield 4. In a possible embodiment, the pane bracket 1 can also be attached to other panes or curved components of the vehicle which are intransparent. In a still further possible embodiment, the pane 4 as illustrated in Fig. 3 is not a windshield of the vehicle, but other window panes of the vehicles having for instance a slightly curved shape. In the embodiment shown in Fig. 3, the pane bracket 1 is assembled to the interior of the pane 4 located within the passenger room of the vehicle. In other applications, it is also possible that the pane bracket is attached to the exterior surface of a curved pane of a vehicle.

## Claims

1. A pane bracket for mounting components in a vehicle,
said pane bracket (1) comprising a casing (2) having a pane-facing wall (3) adapted to fix said pane bracket (1) to a pane (4) of said vehicle,
**characterized in that**
said pane-facing wall (3) has at least one integrally formed and protruding gluing path surface (5) for gluing the pane-facing wall (3) to said pane (4) and standoffs (6) adapted to compensate tolerances between the gluing path surfaces (5) and the pane (4),and
said pane-facing wall (3) of said casing (2) comprises three spherical standoffs (6) to provide a contact plane between the pane bracket (1) and the vehicle's pane (4).

2. The pane bracket according to claim 1,
wherein the casing (2) of said pane bracket (1) is adapted to receive mechanical and/or electronic components.

3. The pane bracket according to one of the preceding claims 1 to 3,
wherein said pane (4) comprises a curved shape.

4. The pane bracket according to claim 3,
wherein the pane-facing wall (3) comprises a curved surface corresponding to the curved shape of the pane (4) of said vehicle.

5. The pane bracket according to one of the preceding claims 1 to 4,
wherein the gluing path surface (5) provide a limited contact area adapted to receive a gluing substance (6) which glues the gluing path surface (5) to the pane (4) of the vehicle.

6. A vehicle comprising at least one pane (4) with a curved shape, wherein a pane bracket (1) according to one of the preceding claims 1 to 6 is attached.

7. The vehicle according to claim 6,
wherein said pane (4) is a transparent window pane of said vehicle.

8. The vehicle according to claim 7,
wherein said window pane (4) is a windshield pane of said vehicle having a curved shape.

9. The vehicle according to one of the preceding claims 6 to 8,
wherein the casing (2) of said pane bracket (1) is adapted to receive mechanical and/or electronic components of a driver assistance system of said vehicle.

10. A method for manufacturing a pane bracket (1) of a vehicle, said pane bracket (1) having a pane-facing wall (3) to fix said pane bracket (1) to a pane (4) of the vehicle,
**characterized in that**
the pane-facing wall (3) is formed with protruding gluing path surfaces (5) and with standoffs (6) to compensate tolerances between the gluing path surfaces (5) and the pane (4),and
the pane-facing wall (3) is formed with three spherical standoffs (6) to provide a contact plane between the pane bracket (1) and the pane (4).

11. The method according to claim 10,
wherein the pane-facing wall (3) is formed such that it matches a curved shape of the respective pane (4).

12. The method according to one of the preceding claims 10 to 11,
wherein the casing (2) of the pane bracket (1) is formed from a fire-resistant plastic material.

## Patentansprüche

1. Scheibenträger zum Montieren von Bauteilen in einem Fahrzeug,
wobei der Scheibenträger (1) ein Gehäuse (2) mit einer einer Scheibe zugewandten Wand (3) umfasst, die dazu angepasst ist, den Scheibenträger (1) an einer Scheibe (4) des Fahrzeugs zu befestigen,
**dadurch gekennzeichnet, dass**
die einer Scheibe zugewandte Wand (3) zumindest eine integral ausgebildete und überstehende Klebestreckenfläche (5) zum Ankleben der einer Scheibe zugewandten Wand (3) an die Scheibe (4) und Abstandshalter (6), die dazu angepasst sind, Toleranzen zwischen den Klebestreckenflächen (5) und der Scheibe (4) auszugleichen, aufweist und
die einer Scheibe zugewandte Wand (3) des Gehäuses (2) drei sphärische Abstandshalter (6) zum Bereitstellen einer Kontaktebene zwischen dem Scheibenträger (1) und der Scheibe (4) des Fahrzeugs umfasst.

2. Scheibenträger nach Anspruch 1,
wobei das Gehäuse (2) des Scheibenträgers (1) dazu angepasst ist, mechanische und/oder elektronische Bauteile aufzunehmen.

3. Scheibenträger nach einem der vorangehenden Ansprüche 1 bis 3,
wobei die Scheibe (4) eine gebogene Form umfasst.

4. Scheibenträger nach Anspruch 3,
wobei die einer Scheibe zugewandte Wand (3) eine der gebogenen Form der Scheibe (4) des Fahrzeugs entsprechende gebogene Fläche umfasst.

5. Scheibenträger nach einem der vorangehenden Ansprüche 1 bis 4,
wobei die Klebestreckenfläche (5) einen begrenzten Kontaktbereich bereitstellt, der dazu angepasst ist, einen Klebstoff (6) aufzunehmen, der die Klebestreckenfläche (5) an die Scheibe (4) des Fahrzeugs klebt.

6. Fahrzeug, umfassend zumindest eine Scheibe (4)
mit einer gebogenen Form, wobei ein Scheibenträger (1) nach einem der vorangehenden Ansprüche 1 bis 6 angebracht ist.

7. Fahrzeug nach Anspruch 6,
wobei die Scheibe (4) eine transparente Fensterscheibe des Fahrzeugs ist.

8. Fahrzeug nach Anspruch 7,
wobei die Fensterscheibe (4) eine Windschutzscheibe des Fahrzeugs ist, die eine gebogene Form aufweist.

9. Fahrzeug nach einem der vorangehenden Ansprüche 6 bis 8,
wobei das Gehäuse (2) des Scheibenträgers (1) dazu angepasst ist, mechanische und/oder elektronische Bauteile eines Fahrerassistenzsystems des Fahrzeugs aufzunehmen.

10. Verfahren zur Herstellung eines Scheibenträgers (1) eines Fahrzeugs, wobei der Scheibenträger (1) eine einer Scheibe zugewandte Wand (3) zum Befestigen des Scheibenträgers (1) an einer Scheibe (4) des Fahrzeugs aufweist,
**dadurch gekennzeichnet, dass**
die einer Scheibe zugewandte Wand (3) mit überstehenden Klebestreckenflächen (5) und mit Abstandhaltern (6) zum Ausgleichen von Toleranzen zwischen den Klebestreckenflächen (5) und den Scheiben (4) ausgebildet ist und
die einer Scheibe zugewandte Wand (3) mit drei sphärischen Abstandshaltern (6) zum Bereitstellen einer Kontaktebene zwischen dem Scheibenträger (1) und der Scheibe (4) ausgebildet ist.

11. Verfahren nach Anspruch 10,
wobei die einer Scheibe zugewandte Wand (3) so ausgebildet ist, dass sie zu einer gebogenen Form der jeweiligen Scheibe (4) passt.

12. Verfahren nach einem der vorangehenden Ansprüche 10 bis 11,
wobei das Gehäuse (2) des Scheibenträgers (1) aus einem feuerbeständigen Kunststoffmaterial ausgebildet ist.

## Revendications

1. Support de vitre pour monter des composants dans un véhicule,
ledit support de vitre (1) comprenant un boîtier (2) ayant une paroi tournée vers la vitre (3) adaptée pour fixer ledit support de vitre (1) sur une vitre (4) dudit véhicule, **caractérisé en ce que**
ladite paroi faisant face à la vitre (3) a au moins une surface de chemin de collage dépassant et formée intégralement (5) pour coller la paroi faisant face à la vitre (3) à ladite vitre (4) et des éléments d'espacement (6) adaptés pour compenser les tolérances entre les surfaces de chemin de collage (5) et la vitre (4), et
ladite paroi faisant face à la vitre (3) dudit boîtier (2) comprenant trois éléments d'espacement (6) sphériques pour fournir un plan de contact entre le support de vitre (1) et la vitre du véhicule (4).

2. Support de vitre selon la revendication 1,
le boîtier (2) dudit support de vitre (1) étant adapté pour accueillir des composants mécaniques et/ou électroniques.

3. Support de vitre selon l'une des revendications précédentes 1 à 3,
ladite vitre (4) comprenant une forme courbe.

4. Support de vitre selon la revendication 3,
la paroi faisant face à la vitre (3) comprenant une surface courbe correspondant à la forme courbe de la vitre (4) dudit véhicule.

5. Support de vitre selon l'une des revendications précédentes 1 à 4,
la surface de chemin de collage (5) fournissant une zone de contact limitée adaptée pour accueillir une substance de collage (6) qui colle la surface de chemin de collage (5) à la vitre (4) du véhicule.

6. Véhicule comprenant au moins une vitre (4) avec une forme courbe, un support de vitre (1) selon l'une des revendications précédentes 1 à 6 y étant attaché.

7. Véhicule selon la revendication 6,
ladite vitre (4) étant une vitre transparente dudit véhicule.

8. Véhicule selon la revendication 7,
ladite vitre (4) étant un pare-brise dudit véhicule ayant une forme courbe.

9. Véhicule selon l'une des revendications précédentes 6 à 8,
le boîtier (2) dudit support de vitre (1) étant adapté pour accueillir des composants mécaniques et/ou électroniques d'un système d'aide à la conduite dudit véhicule.

10. Procédé pour fabriquer un support de vitre (1) d'un véhicule, ledit support de vitre (1) ayant une paroi tournée vers la vitre (3) pour fixer ledit support de vitre (1) sur une vitre (4) dudit véhicule,
**caractérisé en ce que**
la paroi faisant face à la vitre (3) est formée avec des surfaces de chemin de collage (5) et avec des éléments d'espacement (6) pour compenser les tolérances entre les surfaces de chemin de collage (5) et la vitre (4), et
la paroi faisant face à la vitre (3) est formée avec trois éléments d'espacement (6) sphériques pour fournir un plan de contact entre le support de vitre (1) et la vitre du véhicule (4) .

11. Procédé selon la revendication 10,
la paroi faisant face à la vitre (3) étant formée de telle sorte qu'elle est adaptée à la forme courbe de la vitre (4) respective.

12. Procédé selon l'une des revendications précédentes 10 à 11,
le boîtier (2) du support de vitre (1) étant formé dans une matière plastique résistant au feu.
